# EUROPEAN PATENT APPLICATION

(11) **EP 4 803 496 A1**
(43) Date of publication of application: **09.09.2026**
(21) Application number: 24885697.3
(22) Date of filing: 29.10.2024
(51) Int. Cl.: C04B 28/02, C04B 14/10, C04B 14/26, C04B 14/28, C04B 24/12

(54) **METHOD FOR MANUFACTURING HYDRAULIC POWDER**

(30) Priority: 30.10.2023 JP 2023185483
(71) Applicant: Kao Corporation, Tokyo 103-8210 (JP)
(72) Inventor: SHIMADA, Kohei, Tokyo 103-8210 (JP); KAWAKAMI, Hiroyuki, Tokyo 103-8210 (JP); TANAKA, Shunya, Tokyo 103-8210 (JP); NAGOSHI, Yuto, Tokyo 103-8210 (JP); SAGAWA, Keiichirou, Tokyo 103-8210 (JP)
(74) Representative: Hoffmann Eitle
(86) International application number: PCT/JP2024/038463
(87) International publication number: WO 2025/094927

(57) **Abstract**

A method for producing a hydraulic powder, including mixing the following component (B) and the following component (C), and mixing and/or stirring the resulting mixture of components (B) and (C) together with the following component (A):
component (A): cement clinker or cement powder;
component (B): one or more selected from minerals, slag, and ash, containing iron in an amount of less than 2.0 mass% in terms of iron oxide and having a Mohs hardness of 1 or more and 5 or less; and
component (C): a compound represented by the following general formula (c1) or a salt thereof: 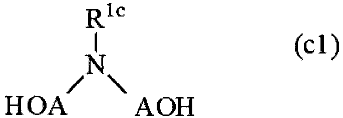 wherein R^{1c} represents a hydrogen atom, a hydrocarbon group having 1 or more and 4 or less carbons, a hydroxyalkyl group having 2 or more and 4 or less carbons, or a polar functional group having 4 or more and 10 or less carbons; and each AO independently represents an alkylene oxide having 2 or more and 4 or less carbons.

## Description

### Field of the Invention

The present invention relates to a method for producing a hydraulic powder.

### Background of the Invention

Cement concrete is an indispensable construction material for human development, which is produced by mixing Portland cement as a main component with water, fine aggregates, and coarse aggregates, molding the resulting mixture, and allowing the mixture to harden.

Portland cement is produced using cement clinker as a main raw material. The cement clinker is obtained by drying and mixing limestone, clay, siliceous stone, and iron raw materials, or the like, and calcining the resulting mixture. In the calcination process, a large amount of CO₂ is emitted due to decarboxylation of limestone. In recent years, as part of efforts to reduce CO₂ emissions in the cement industry, promotion of the spread of blended cement has been investigated. The blended cement is obtained by mixing minerals, slag, or ash, and the like exhibiting (latent) hydraulic properties, instead of cement clinker.

Examples of blending materials to be mixed into the blended cement, such as minerals, slag, or ash, and the like exhibiting (latent) hydraulic properties, include, for example, those which have pozzolanic properties (fly ash, silica fume, volcanic ash, silicate clay, and calcined clay); those which have latent hydraulic properties (blast furnace slag); and those which react with C3A (tricalcium aluminate) or C4AF (tetracalcium aluminoferrite) (limestone), and the like.

### Summary of the Invention

JP-A 2022-151074 discloses a cement composition having high strength and excellent flowability, and a method for producing the same, the composition comprising predetermined ordinary Portland cement clinker, gypsum, limestone, and an aid containing an alkanolamine, wherein an alkanolamine content in a total amount of ordinary Portland cement clinker, gypsum, and the aid is 10 to 210 mg/kg, and a limestone content in a total amount of ordinary Portland cement clinker, gypsum, the aid, and limestone is 3 to 10 mass%.

However, in producing blended cement, when cement clinker and the like as raw materials and blending materials are stirred and mixed all at once, the blending materials, which are softer than the cement clinker and the like, may be excessively pulverized into fine particles, thereby reducing powder flowability and/or deteriorating the working environment due to dust.

As countermeasures for solving the above problems, measures such as separately grinding the cement clinker and the like and the blending materials and mixing them in a subsequent step are often taken. However, such an approach requires additional facilities, such as mixing facilities for mixing the cement clinker and the like with the blending materials, storage facilities for storing the blending materials, and the like, thereby causing problems such as increased capital investment, or the like.

The present invention provides a method for producing a hydraulic powder in which fine pulverization is suppressed.

In an embodiment, the present invention provides a method for producing a hydraulic powder, including mixing the following component (B) and the following component (C), and mixing and/or stirring the resulting mixture of components (B) and (C) together with the following component (A):
component (A): cement clinker or cement powder;
component (B): one or more selected from minerals, slag, and ash, containing iron in an amount of less than 2.0 mass% in terms of iron oxide and having a Mohs hardness of 1 or more and 5 or less; and
component (C): a compound represented by the following general formula (c1) or a salt thereof: 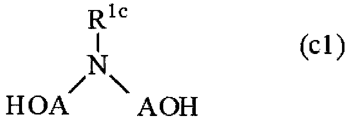
wherein R^{1c} represents a hydrogen atom, a hydrocarbon group having 1 or more and 4 or less carbons, a hydroxyalkyl group having 2 or more and 4 or less carbons, or a polar functional group having 4 or more and 10 or less carbons; and each AO independently represents an alkylene oxide having 2 or more and 4 or less carbons.

Further, in another embodiment, the present invention provides a method for producing a hydraulic powder, including mixing the above component (A) and the above component (C), and mixing and/or stirring the resulting mixture of components (A) and (C) together with the above component (B).

The present invention provides a method for producing a hydraulic powder in which fine pulverization is suppressed.

### Embodiments of the Invention

In recent years, SDGs have been advocated for the realization of a sustainable society. The present invention is helpful to improvement in the productivity of blended cement, and is considered to be a possible technology that contributes, for example, to SDGs Nos. 9, 11, 12, 13, and the like.

The present inventors have found that, when clinker or Portland cement as component (A) and a blending material as component (B) are mixed and/or stirred, allowing a predetermined compound as component (C) to be present in advance suppresses fine pulverization of blended cement. Although the reason why such an effect is exhibited is not necessarily fully understood, it is presumed as follows.

It is considered that fine pulverization of the blending material proceeds because the blending material, which is relatively soft, repeatedly comes into contact with cement clinker or the like, which is relatively hard, during the stirring and/or mixing process. It is considered that component (C), by having a functional group capable of electrostatically interacting with cationic sites on the surface of the blending material, covers and protects the surface of the blending material, thereby suppressing fine pulverization of the blending material.

It is presumed that, by allowing component (C) to be present at the interface between component (A) and component (B) before mechanical force is applied in mixing and/or stirring components (A) and (B), component (C) serves to achieve uniform mixing of them while suppressing fine pulverization of the soft blending material due to the mechanical force.

On the other hand, it is considered that, when a blending material containing a large amount of iron is used, component (C), which adsorbs onto iron to a considerable extent, adsorbs onto iron-rich sites on the surface of the blending material, resulting in insufficient coverage of the entire blending material and a decreased ability to suppress fine pulverization.

Note that the method for producing a hydraulic powder of the present invention is not limited in any way by this mechanism.

### <Method for producing hydraulic powder>

In an exemplary embodiment, the method for producing a hydraulic powder of the present invention includes mixing and/or stirring a mixture containing the following component (A) and the following component (B) in the presence of the following component (C):
component (A): cement clinker or cement powder;
component (B): one or more selected from minerals, slag, and ash, containing iron in an amount of less than 2.0 mass% in terms of iron oxide and having a Mohs hardness of 1 or more and 5 or less; and
component (C): a compound represented by the following general formula (c1) or a salt thereof: 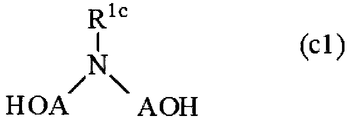
wherein R^{1c} represents a hydrogen atom, a hydrocarbon group having 1 or more and 4 or less carbons, a hydroxyalkyl group having 2 or more and 4 or less carbons, or a polar functional group having 4 or more and 10 or less carbons; and each AO independently represents an alkylene oxide having 2 or more and 4 or less carbons.

Further, in an exemplary embodiment, the present invention provides a method for producing a hydraulic powder, including mixing the above component (B) and the above component (C), and mixing and/or stirring the resulting mixture of components (B) and (C) together with the above component (A).

In this method for producing a hydraulic powder, the resulting mixture of components (B) and (C) may be mixed and/or stirred together with a mixture obtained in advance by mixing component (A) and component (C).

Further, in an exemplary embodiment, the present invention provides a method for producing a hydraulic powder, including mixing the above component (A) and the above component (C), and mixing and/or stirring the resulting mixture of components (A) and (C) together with the above component (B).

In this method for producing a hydraulic powder, the resulting mixture of components (A) and (C) may be mixed and/or stirred together with a mixture obtained in advance by mixing component (B) and component (C).

From the viewpoint of further suppressing fine pulverization of the hydraulic powder, the method for producing a hydraulic powder of the present invention is preferably a method for producing a hydraulic powder, including mixing component (B) and component (C), and mixing and/or stirring the resulting mixture together with component (A).

The method for producing a hydraulic powder of the present invention may be a method for producing a hydraulic powder, including allowing component (C) to be present in either component (A) or component (B), and mixing and/or stirring that component with the other.

Further, the method for producing a hydraulic powder of the present invention may be a method for producing a hydraulic powder, including mixing component (C) with either component (A) or component (B), then adding the other component, and mixing and/or stirring the resulting mixture.

In the method for producing a hydraulic powder of the present invention, stirring the mixture containing component (A) and component (B) in the presence of component (C) means stirring the mixture with component (C) already present in the mixture.

Further, the method for producing a hydraulic powder of the present invention may be a method for producing a hydraulic powder, including adding component (C) to a mixture of component (A) and component (B), and stirring the resulting mixture to which component (C) has been added.

Specifically, from the viewpoint of suppressing a decrease in the particle size of component (B) due to direct contact between components (A) and (B), preferred methods include a method involving adding component (B) to a mixture of components (A) and (C) and stirring the resulting mixture; a method involving adding component (A) to a mixture of components (B) and (C) and stirring the resulting mixture; and a method involving adding components (A) and (B) to component (C) and stirring the mixture.

Examples of methods for adding component (C) include supplying a liquid mixture containing component (C), preferably in the form of a solution, by dropwise addition, spraying, or the like. Further, as needed, other components, for example, a defoamer, water, a known grinding aid, and the like may optionally be mixed into the mixture of components (A) and (B), in addition to component (C). Component (C), or component (C) together with the other components, may be added to the mixture of components (A) and (B) either all at once as the total amount to be ultimately used, or in divided portions. Further, component (C) may be added by being supplied continuously or intermittently.

Specifically, component (C) may be added by spraying it onto component (A) or component (B), or by supporting it on component (A) or component (B), and mixing or stirring may be started after components (A), (B), and (C) have all been charged. Alternatively, component (A) or component (B) may be mixed or stirred together with component (C) for a certain period of time, and then the remaining component (B) or component (A) may be added, followed by mixing or stirring again.

### <Component (A)>

Component (A) is cement clinker or cement powder.

Cement clinker is obtained by calcining raw materials such as limestone, clay, iron slag, and the like (it may also contain gypsum), and has a property of hardening upon reacting with water.

In the present invention, the hydraulic powder is a hydraulic material. Examples of materials having a property of hardening upon reacting with water include alkaline earth metal oxides, and oxides such as SiO₂, Al₂O₃, Fe₂O₃, TiO₂, P₂O₅, ZnO, and the like. These generally form hydrates at room temperature or under hydrothermal conditions. For example, cement clinker contains, as its components, 3CaO·SiO₂ (C3S: alite), 2CaO·SiO₂ (C2S: belite), 3CaO·Al₂O₃ (C3A: calcium aluminate), and 4CaO·Al₂O₃·Fe₂O₃ (C4AF: calcium aluminoferrite).

Cement clinker may be clinker nodules obtained by calcining a mixture containing one or more selected from, for example, limestone (CaCO₃), clay (Al₂O₃, SiO₂), siliceous stone (SiO₂), iron slag (Fe₂O₃), various types of incineration ash containing mineral components, dry powder of lime-treated sewage sludge, and other raw materials commonly used for cement production.

Further, examples of cement powder include cement, particularly Portland cement. Portland cement is produced as a powder having a predetermined specific surface area, for example, a Blaine value of 2,500 cm²/g or more or a BET specific surface area of 0.8 m²/g or more, by preliminarily grinding cement clinker, adding an appropriate amount of gypsum, and performing finish grinding. Examples of Portland cement include ordinary Portland cement, high early strength Portland cement, ultra high early strength Portland cement, sulfate-resisting Portland cement, low-heat Portland cement, white Portland cement, and eco-cement (for example, JIS R 5214, and the like). Among these, from the viewpoint of shortening the time required for a hydraulic composition to reach a required strength, cement selected from high early strength Portland cement, ordinary Portland cement, sulfate-resisting Portland cement, and white Portland cement is preferable, and cement selected from high early strength Portland cement and ordinary Portland cement is more preferable.

Component (A) is preferably cement clinker or Portland cement, more preferably cement clinker, from the viewpoint of allowing the effects of the present invention to be more fully realized.

An average particle size of component (A) to be mixed with component (B) is not particularly limited, but is preferably 1 µm or more, more preferably 5 µm or more, further preferably 10 µm or more, from the viewpoints of powder flowability and dust suppression, and preferably 100 µm or less, more preferably 50 µm or less, further preferably 25 µm or less, from the viewpoint of strength of a hardened product of a hydraulic composition.

The average particle size of component (A) is determined by measuring a particle size distribution using a laser diffraction/scattering particle size distribution analyzer (LA-920; manufactured by HORIBA, Ltd.), with "Ethanol (95)" (manufactured by FUJIFILM Wako Pure Chemical Corporation) used as a dispersion medium. An arithmetic mean diameter is used as the average particle size (µm).

Note that, when component (A) is ground by mixing components (A), (B), and (C) and stirring the resulting mixture, component (A) may be used, for example, as nodules, irrespective of whether the average particle size of component (A) falls within the above range.

### <Component (B)>

Component (B) is one or more selected from minerals, slag, and ash, containing iron in an amount of less than 2.0 mass% in terms of iron oxide and having a Mohs hardness of 1 or more and 5 or less. Component (B) may be a material that optionally contains iron, and contains iron in an amount of less than 2.0 mass% in terms of iron oxide.

Examples of component (B) include carbonate minerals such as calcium carbonate, magnesite, dolomite, and the like; pozzolanic powders such as fly ash, silica fume, volcanic ash, woody biomass combustion ash, silicate clay, and the like; latent hydraulic powders such as coal ash, blast furnace slag, diatomaceous earth, and the like; and silicate minerals such as kaolin, aluminum silicate, clay, talc, mica, calcium silicate, sericite, bentonite, and the like. From the viewpoint of a fine pulverization suppression effect, component (B) is preferably one or more selected from carbonate minerals, latent hydraulic powders, and silicate minerals.

Component (B) is preferably one or more of the above components that contain iron in an amount of less than 2.0 mass% in terms of iron oxide and have a Mohs hardness of 1 or more and 5 or less.

From the viewpoint of a fine pulverization suppression effect, component (B) more preferably includes one or more selected from calcium carbonate, kaolin, and dolomite.

Component (B) contains iron, in terms of iron oxide, in an amount of preferably 0 mass% or more, more preferably 0.01 mass% or more, from the viewpoint of strength development of a hydraulic composition, and less than 2.0 mass%, preferably 1.5 mass% or less, more preferably 1.0 mass% or less, from the viewpoint of a fine pulverization suppression effect. The iron content of component (B) is measured by the following method.

### <Method for measuring iron content of component (B)>

The iron content of component (B) is measured using a powder X-ray diffractometer (RINT-2500; manufactured by Rigaku Holdings Corporation). Measurement conditions are as follows. Target: CuKα; Tube current: 40 mA; Tube voltage: 200 kV; and Scan range: 5 to 70 deg; 2θ. Scan conditions are as follows. Step scanning; Step width: 0.02°; and Counting time: 2 seconds. Further, "α-corundum (Al₂O₃)" is added as a reference material in an amount of 10 parts by mass relative to component (B), and the iron content, in terms of iron oxide (Fe₂O₃), is determined using Rietveld analysis software on the basis of the peak area of the reference material. As the Rietveld analysis software, PDXL Ver. 1.8 manufactured by Rigaku Holdings Corporation is used.

The Mohs hardness of component (B) is 1 or more, preferably 1.5 or more, more preferably 2 or more, from the viewpoint of strength of a hardened product of a hydraulic composition, and 5 or less, preferably 4.5 or less, more preferably 4 or less, from the viewpoint of a fine pulverization suppression effect. The Mohs hardness of component (B) is measured by the following method.

### <Method for measuring Mohs hardness of component (B)>

The Mohs hardness of component (B) is a hardness determined using the hardnesses of ten reference minerals as a scale, and is measured using a Mohs hardness tester (manufactured by Tokyo-Science. Co, Ltd). The reference minerals, in order from the softest mineral (Mohs hardness: 1) to the hardest mineral (Mohs hardness: 10), are talc, gypsum, calcite, fluorite, apatite, orthoclase, quartz, topaz, corundum, and diamond. In this specification, the hardness is determined based on the presence or absence of a scratch when a target sample is rubbed with these reference minerals. For example, a target sample that is not scratched by calcite but is scratched by fluorite has a Mohs hardness of 3.5.

An average particle size of component (B) to be mixed with component (A) is not particularly limited, but is preferably 1 µm or more, more preferably 5 µm or more, further preferably 25 µm or more, from the viewpoints of powder flowability and dust suppression, and preferably 100 µm or less, more preferably 70 µm or less, further preferably 35 µm or less, from the viewpoint of strength of a hardened product of a hydraulic composition.

The average particle size of component (B) is determined by measuring a particle size distribution using a laser diffraction/scattering particle size distribution analyzer (LA-920; manufactured by HORIBA, Ltd.), with "Ethanol (95)" (manufactured by FUJIFILM Wako Pure Chemical Corporation) used as a dispersion medium. An arithmetic mean diameter is used as the average particle size (µm).

Note that, when component (B) is ground by mixing components (A), (B), and (C) and stirring the resulting mixture, component (B) may be used, for example, as nodules, irrespective of whether the average particle size of component (B) falls within the above range.

### <Component (C)>

Component (C) is a compound represented by the above general formula (c1) or a salt thereof. Component (C) may be used alone, or two or more thereof may be used in combination. The salt of the compound represented by the above general formula (c1) is not particularly limited, but is preferably a halide or a carboxylate, more preferably a chloride, an acetate, a lactate, or a salt formed with a polycarboxylic acid-based dispersant.

In the general formula (c1), R^{1c} is a hydrogen atom, a hydrocarbon group having 1 or more and 4 or less carbons, a hydroxyalkyl group having 2 or more and 4 or less carbons, or a polar functional group having 4 or more and 10 or less carbons.

In the general formula (c1), the hydrocarbon group having 1 or more and 4 or less carbons of R^{1c} is preferably a methyl group, an ethyl group, or a propyl group, from the viewpoint of a fine pulverization suppression effect.

Further, in the general formula (c1), the hydroxyalkyl group having 2 or more and 4 or less carbons of R^{1c} is preferably a hydroxyethyl group or a hydroxypropyl group, from the viewpoint of a fine pulverization suppression effect.

Further, in the general formula (c1), the polar functional group having 4 or more and 10 or less carbons of R^{1c} includes, for example, a functional group having a structure represented by the following general formula (c2), a tris(hydroxymethyl)methyl group, or a 6-(bis(hydroxyethyl)amino)-6-oxohexanoyl group. The polar functional group is preferably a 2,2'-((2-ethyl)azanediyl)bis(ethan-1-ol) group, a tris(hydroxymethyl)methyl group, or a 6-(bis(hydroxyethyl)amino)-6-oxohexanoyl group, more preferably a 2,2'-((2-ethyl)azanediyl)bis(ethan-1-ol) group. 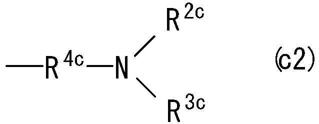 wherein R^{2c} and R^{3c} each independently represent a hydroxyalkyl group having 1 or more and 4 or less carbons; and R^{4c} is an alkylene group having 1 or more and 4 or less carbons.

In the general formula (c2), the hydroxyalkyl groups having 1 or more and 4 or less carbons of R^{2c} and R^{3c} are each independently preferably a hydroxyethyl group or a hydroxypropyl group, from the viewpoint of a fine pulverization suppression effect.

In the general formula (c2), the alkylene group having 1 or more and 4 or less carbons of R^{4c} includes an ethylene group, a propylene group, or a butylene group. From the viewpoint of a fine pulverization suppression effect, the alkylene group of R^{4c} is preferably an ethylene group.

In the general formula (c1), R^{1c} is preferably a hydrogen atom or a polar functional group having 4 or more and 10 or less carbons, more preferably a hydrogen atom or a 2,2'-((2-ethyl)azanediyl)bis(ethan-1-ol) group, further preferably a hydrogen atom, from the viewpoint of a fine pulverization suppression effect.

In the general formula (c1), each AO independently preferably represents EO (ethylene oxide) or PO (propylene oxide), from the viewpoint of a fine pulverization suppression effect.

In the method for producing a hydraulic powder of the present invention, for component (C), a mass ratio of an adsorption amount (aB) of component (C) on component (B) to an adsorption amount (aA) of component (C) on component (A), (aB)/(aA), is preferably 1.0 or more.

In the method for producing a hydraulic powder of the present invention, for component (C), the mass ratio (aB)/(aA) is preferably 1.0 or more, more preferably 1.3 or more, further preferably 1.5 or more, and preferably 10.0 or less, more preferably 8.0 or less, further preferably 6.0 or less, from the viewpoint of a fine pulverization suppression effect.

The adsorption amount (aA) of component (C) on component (A) is an amount measured by the method described below. The adsorption amount (aB) of component (C) on component (B) is an amount measured in the same manner as the method described below, except that component (A) is replaced with component (B).

The mass ratio (aB)/(aA) may be a mass ratio (aB)/(aA) of an adsorption amount (aB) of component (C) on component (B) per unit mass of component (B) to an adsorption amount (aA) of component (C) on component (A) per unit mass of component (A).

Further, the adsorption amount (aA) of component (C) on component (A) or the adsorption amount (aB) of component (C) on component (B) is an adsorption amount of component (C) on component (A) or component (B) before mixing component (A) and component (B).

### <Method for measuring adsorption amount (aA) of component (C) on component (A)>

All test materials are adjusted to 20°C in advance. 0.01 g of component (C) is added to a 50-mL centrifuge tube and diluted with tap water to prepare an aqueous solution of component (C) having a concentration of 400 ppm. Next, 25 g of component (A) is placed in this centrifuge tube and mixed with the aqueous solution for 1 minute by inverting the tube to prepare a cement paste. Immediately after preparation, the cement paste is centrifuged at 3,000 rpm for 1 minute, and the supernatant is then filtered through a membrane filter (DISMIC 25HP045AN; manufactured by ADVANTEC Co., LTD.) to obtain a filtrate. The filtrate is diluted 20-fold with 0.02 mol/L HCl aq. In the diluted filtrate, TOC (mg/L) is detected by a combustion catalytic oxidation method using an online total organic carbon analyzer (TOC-V; manufactured by Shimadzu Corporation) and converted to a concentration of component (C) using a calibration curve prepared in advance by diluting component (C). Based on the concentration of a non-adsorbed fraction of component (C) with respect to component (A), the adsorption amount (aA) of component (C) on component (A) is calculated.

Component (C) includes, for example, one or more selected from diethanolamine and derivatives thereof, diisopropanolamine and derivatives thereof, and N,N,N',N'-tetrakis(2-hydroxyethyl)ethylenediamine and derivatives thereof. Among these, component (C) is preferably one or more selected from diethanolamine and derivatives thereof, more preferably one or more selected from diethanolamine and derivatives thereof in which the mass ratio (aB)/(aA) falls within the above range, from the viewpoint of a fine pulverization suppression effect.

Specifically, component (C) is preferably one or more selected from diethanolamine, diisopropanolamine, and N,N,N',N'-tetrakis(2-hydroxyethyl)ethylenediamine, more preferably one or more selected from diethanolamine and diisopropanolamine, from the viewpoint of a fine pulverization suppression effect.

### <Mixing amount of each component, and the like>

In the method for producing a hydraulic powder of the present invention, component (A) is mixed, relative to 100 parts by mass of the total of a mixing amount of component (A) and a mixing amount of component (B), in an amount of preferably 50 parts by mass or more, more preferably 60 parts by mass or more, further preferably 70 parts by mass or more, from the viewpoint of strength development, and preferably 99 parts by mass or less, more preferably 95 parts by mass or less, further preferably 90 parts by mass or less, from the viewpoint of a fine pulverization suppression effect.

In the method for producing a hydraulic powder of the present invention, component (B) is mixed, relative to 100 parts by mass of the total of a mixing amount of component (A) and a mixing amount of component (B), in an amount of preferably 1 part by mass or more, more preferably 5 parts by mass or more, further preferably 10 parts by mass or more, from the viewpoint of a fine pulverization suppression effect, and preferably 50 parts by mass or less, more preferably 40 parts by mass or less, further preferably 30 parts by mass or less, from the viewpoint of strength development of a hydraulic composition.

In the method for producing a hydraulic powder of the present invention, component (A) and component (B) are mixed such that a mass ratio of a mixing amount of component (A) to a mixing amount of component (B), (A)/(B), is preferably 1 or more, more preferably 1.5 or more, further preferably 2.0 or more, from the viewpoint of strength development of a hydraulic composition, and preferably 99 or less, more preferably 19 or less, further preferably 9 or less, from the viewpoint of a fine pulverization suppression effect.

In the method for producing a hydraulic powder of the present invention, component (C) is mixed, relative to 100 parts by mass of the total of a mixing amount of component (A) and a mixing amount of component (B), in an amount of preferably 0.005 parts by mass or more, more preferably 0.0075 parts by mass or more, further preferably 0.01 parts by mass or more, from the viewpoint of a fine pulverization suppression effect, and preferably 0.5 parts by mass or less, more preferably 0.3 parts by mass or less, further preferably 0.1 parts by mass or less, from the viewpoint of a fine pulverization suppression effect.

In the method for producing a hydraulic powder of the present invention, optional components listed for the hydraulic powder of the present invention, which is described later in detail, may be mixed as desired.

The hydraulic powder produced by the method for producing a hydraulic powder of the present invention is preferably a hydraulic powder that contains a material having a property of hardening upon reacting with water or with an alkaline material, further preferably a hydraulic powder that contains a material having a property of hardening upon reacting with water, particularly clinker, and one or more blending materials selected from the group consisting of blast furnace slag, fly ash, and silica fume [hereinafter referred to as "blending material (a)"]. Blending material (a) includes component (B), and may also include minerals, slag, and/or ash that do not fall under component (B). The content of blending material (a) in the hydraulic powder is preferably 8 mass% or more, more preferably 25 mass% or more, further preferably 40 mass% or more, and preferably 80 mass% or less, more preferably 70 mass% or less, further preferably 60 mass% or less, from the viewpoint of the rate of strength improvement, in 3-day strength, relative to an additive-free condition. The balance, excluding this content, is preferably a material having a property of hardening upon reacting with water. Accordingly, in the hydraulic powder containing the above blending material (a), the content of a material having a property of hardening upon reacting with water, such as clinker or the like, is preferably 20 mass% or more, more preferably 30 mass% or more, further preferably 40 mass% or more, and preferably 92 mass% or less, more preferably 75 mass% or less, further preferably 60 mass% or less, in the hydraulic powder. Further, the total content of a material having a property of hardening upon reacting with water or with an alkaline material, such as clinker or the like, and the above blending material (a), in a hydraulic compound, is preferably 70 mass% or more, more preferably 90 mass% or more, and preferably 100 mass% or less, and may be 100 mass%. The method for producing a hydraulic powder of the present invention is suitable as a method for producing blended cement (for example, JIS R 5211 to 5213).

When obtaining Portland cement as the hydraulic powder, the Portland cement is, for example, produced as a powder having a predetermined specific surface area, such as a Blaine value of 2,500 cm²/g or more or a BET specific surface area of 0.8 m²/g or more, by preliminarily grinding clinker (also referred to as cement clinker; it may contain gypsum), which is a hydraulic compound obtained by calcining raw materials such as limestone, clay, iron slag, and the like, together with limestone as component (B), adding an appropriate amount of gypsum, and performing finish grinding. A hydraulic powder containing a blending material can also be produced in the same manner by using the clinker together with the above blending material (e.g., a blending material including limestone as component (B)).

In the method for producing a hydraulic powder of the present invention, stirring conditions may be adjusted so as to obtain a powder having an appropriate particle size depending on raw materials, intended use (strength class of cement), and the like. In general, it is preferable to stir a mixture of components (A) and (B) until the powder reaches a Blaine value of preferably 2,500 cm²/g or more, more preferably 3,000 cm²/g or more, and preferably 5,000 cm²/g or less, more preferably 4,000 cm²/g or less. Further, the density (specific gravity) of the mixture of components (A) and (B) may be unknown, which may make measurement of the Blaine value difficult. In such a case, the BET specific surface area can be used instead. The BET specific surface area refers to a specific surface area measured by a gas adsorption method in which gas molecules such as nitrogen (N₂) and the like are adsorbed on solid particles and the surface area is determined from the adsorbed amount. Specifically, the specific surface area is determined by measuring monolayer adsorption amount VM based on the BET equation (Brunauer, Emmett and Teller's equation) from the relationship between pressure P and adsorption amount V. When stirring the mixture of components (A) and (B), it is preferable to stir the mixture until the powder reaches a BET specific surface area of preferably 0.8 m²/g or more, more preferably 1.2 m²/g or more, and preferably 3.0 m²/g or less, more preferably 2.5 m²/g or less. The desired specific surface area, whether expressed as a Blaine value or a BET specific surface area, can be obtained, for example, by adjusting the stirring time. A longer stirring time tends to increase the specific surface area, and a shorter stirring time tends to decrease the specific surface area. Regarding the specific surface area, for example, in the production method of the present invention, extending the stirring time to increase the BET specific surface area of the hydraulic powder can further shorten the time required for a hydraulic composition to reach a required strength.

Further, in the method for producing a hydraulic powder of the present invention, it is preferable to stir the mixture of components (A) and (B) such that an average particle size of the hydraulic powder is preferably 10 µm or more, more preferably 15 µm or more, further preferably 20 µm or more, from the viewpoint of handleability of the hydraulic powder, and preferably 50 µm or less, more preferably 40 µm or less, further preferably 30 µm or less, from the viewpoint of strength development of a hydraulic composition.

The average particle size of the hydraulic powder is a value measured by the method described in Examples below.

In the method for producing a hydraulic powder of the present invention, a stirring device used for stirring a hydraulic compound, such as a mixture containing components (A) and (B), is not particularly limited, but examples thereof may include ball mills, Loesche mills, and the like, which are commonly used for grinding cement and the like. The material of a stirring medium of the device is preferably a material having hardness equal to or higher than that of a substance to be stirred (for example, in the case of cement clinker, calcium aluminate). Examples of commercially available materials may include steel, stainless steel, alumina, zirconia, titania, tungsten carbide, and the like. The substance to be stirred may be a substance to be ground. Further, the stirring medium may be a grinding medium.

In the method for producing a hydraulic powder of the present invention, mixing and/or stirring of a mixture of components (A), (B), and (C) is not particularly limited, and can be performed, for example, using a grinding machine equipped with a rotatable horizontally elongated cylindrical body. By placing the substance to be stirred and the stirring medium in the body and rotating the body circumferentially about the cylindrical axis, the substance to be stirred can be ground by impact generated through contact between the substance to be stirred and the stirring medium within the body.

The rotational speed of the body is preferably 1 rpm or more, more preferably 5 rpm or more, further preferably 10 rpm or more, and preferably 50 rpm or less, more preferably 35 rpm or less, further preferably 20 rpm or less, from the viewpoint of productivity.

### <Hydraulic powder>

According to the method for producing a hydraulic powder of the present invention, a hydraulic powder in which fine pulverization is suppressed [hereinafter also referred to as the hydraulic powder of the present invention] can be produced.

In an exemplary embodiment, the hydraulic powder of the present invention is a hydraulic powder containing component (A), component (B), and component (C).

Preferable embodiments of components (A), (B), and (C) in the hydraulic powder of the present invention are the same as the preferable embodiments of components (A), (B), and (C) described above for the method for producing a hydraulic powder of the present invention.

### <Composition of the hydraulic powder, and the like>

The hydraulic powder of the present invention contains component (A), relative to 100 parts by mass of the total of component (A) and component (B) in the hydraulic powder, in an amount of preferably 50 parts by mass or more, more preferably 60 parts by mass or more, further preferably 70 parts by mass or more, from the viewpoint of strength development, and preferably 99 parts by mass or less, more preferably 95 parts by mass or less, further preferably 90 parts by mass or less, from the viewpoint of a fine pulverization suppression effect.

The content of component (A) in the hydraulic powder of the present invention is preferably 50 mass% or more, more preferably 60 mass% or more, further preferably 70 mass% or more, from the viewpoint of strength development, and preferably 99 mass% or less, more preferably 95 mass% or less, further preferably 90 mass% or less, from the viewpoint of a fine pulverization suppression effect.

The hydraulic powder of the present invention contains component (B), relative to 100 parts by mass of the total of component (A) and component (B) in the hydraulic powder, in an amount of preferably 1 part by mass or more, more preferably 5 parts by mass or more, further preferably 10 parts by mass or more, from the viewpoint of a fine pulverization suppression effect, and preferably 50 parts by mass or less, more preferably 40 parts by mass or less, further preferably 30 parts by mass or less, from the viewpoint of strength development of a hydraulic composition.

The content of component (B) in the hydraulic powder of the present invention is preferably 1 mass% or more, more preferably 5 mass% or more, further preferably 10 mass% or more, from the viewpoint of a fine pulverization suppression effect, and preferably 50 mass% or less, more preferably 40 mass% or less, further preferably 30 mass% or less, from the viewpoint of strength development of a hydraulic composition.

In the hydraulic powder of the present invention, a mass ratio of the content of component (A) to the content of component (B), (A)/(B), is preferably 1 or more, more preferably 1.5 or more, further preferably 2.0 or more, from the viewpoint of strength development of a hydraulic composition, and preferably 99 or less, more preferably 19 or less, further preferably 9 or less, from the viewpoint of a fine pulverization suppression effect.

The hydraulic powder of the present invention contains component (C), relative to 100 parts by mass of the total of component (A) and component (B) in the hydraulic powder, in an amount of preferably 0.005 parts by mass or more, more preferably 0.0075 parts by mass or more, further preferably 0.01 parts by mass or more, from the viewpoint of a fine pulverization suppression effect, and preferably 0.5 parts by mass or less, more preferably 0.3 parts by mass or less, further preferably 0.1 parts by mass or less, from the viewpoint of a fine pulverization suppression effect.

The content of component (C) in the hydraulic powder of the present invention is preferably 0.005 mass% or more, more preferably 0.0075 mass% or more, further preferably 0.01 mass% or more, from the viewpoint of a fine pulverization suppression effect, and preferably 0.5 mass% or less, more preferably 0.3 mass% or less, further preferably 0.1 mass% or less, from the viewpoint of a fine pulverization suppression effect.

The hydraulic powder of the present invention may optionally contain a defoamer, water, a known grinding aid, and the like.

In an exemplary embodiment, the hydraulic powder of the present invention may be a hydraulic powder prepared by blending component (A), component (B), and component (C).

Further, the hydraulic powder of the present invention may a hydraulic powder prepared by blending components (A), (B), and (C), and further the above optional components.

The formulation amounts of component (A), component (B), component (C), and the optional components in the hydraulic powder of the present invention may be determined by applying the preferable mixing amounts of the respective components in the method for producing a hydraulic powder of the present invention, with "mixing amount" replaced by "formulation amount." Likewise, the mass ratios of the formulation amounts of the respective components in the hydraulic powder of the present invention may be determined by applying the mass ratios of the mixing amounts of the respective components in the method for producing a hydraulic powder of the present invention, with "mass ratio of mixing amount" replaced by "mass ratio of formulation amount."

The hydraulic powder obtained by the production method of the present invention can be used as a material for concrete structures or concrete products.

Further, a hydraulic composition produced using the hydraulic powder obtained by the production method of the present invention exhibits improved compressive strength upon hardening, particularly improved early strength. Such a hydraulic composition can be produced by mixing the hydraulic powder obtained by the production method of the present invention with water.

Aspects of the present invention are illustrated below. The matters mentioned for the method for producing a hydraulic powder and the hydraulic powder of the present invention can be appropriately applied to these aspects.

<1> A method for producing a hydraulic powder, including mixing the following component (B) and the following component (C), and mixing and/or stirring the resulting mixture of components (B) and (C) together with the following component (A):
   component (A): cement clinker or cement powder;
   component (B): one or more selected from minerals, slag, and ash, containing iron in an amount of less than 2.0 mass% in terms of iron oxide and having a Mohs hardness of 1 or more and 5 or less; and
   component (C): a compound represented by the following general formula (c1) or a salt thereof: 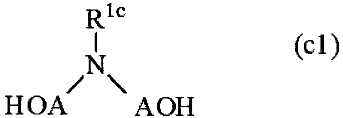
   wherein R^{1c} represents a hydrogen atom, a hydrocarbon group having 1 or more and 4 or less carbons, a hydroxyalkyl group having 2 or more and 4 or less carbons, or a polar functional group having 4 or more and 10 or less carbons; and each AO independently represents an alkylene oxide having 2 or more and 4 or less carbons.
<2> The method for producing a hydraulic powder according to <1>, wherein the resulting mixture of components (B) and (C) is mixed and/or stirred together with a mixture obtained in advance by mixing component (A) and component (C).
<3> A method for producing a hydraulic powder, including mixing the following component (A) and the following component (C), and mixing and/or stirring the resulting mixture of components (A) and (C) together with the following component (B):
   component (A): cement clinker or cement powder;
   component (B): one or more selected from minerals, slag, and ash, containing iron in an amount of less than 2.0 mass% in terms of iron oxide and having a Mohs hardness of 1 or more and 5 or less; and
   component (C): a compound represented by the following general formula (c1) or a salt thereof: 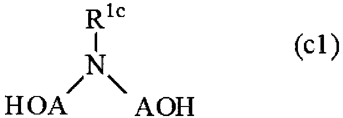
   wherein R^{1c} represents a hydrogen atom, a hydrocarbon group having 1 or more and 4 or less carbons, a hydroxyalkyl group having 2 or more and 4 or less carbons, or a polar functional group having 4 or more and 10 or less carbons; and each AO independently represents an alkylene oxide having 2 or more and 4 or less carbons.
<4> The method for producing a hydraulic powder according to <3>, wherein the resulting mixture of components (A) and (C) is mixed and/or stirred together with a mixture obtained in advance by mixing component (B) and component (C).
<5> The method for producing a hydraulic powder according to any one of <1> to <4>, wherein R^{1c} in the general formula (c1) is a hydrogen atom or a polar functional group having 4 or more and 10 or less carbons, and preferably represents a hydrogen atom.
<6> The method for producing a hydraulic powder according to any one of <1> to <5>, wherein a mass ratio of an adsorption amount (aB) of component (C) on component (B) to an adsorption amount (aA) of component (C) on component (A), (aB)/(aA), is preferably 1.0 or more, more preferably 1.3 or more, further preferably 1.5 or more, and preferably 10.0 or less, more preferably 8.0 or less, further preferably 6.0 or less.
<7> The method for producing a hydraulic powder according to any one of <1> to <6>, wherein component (C) is mixed in an amount of preferably 0.005 parts by mass or more and 0.5 parts by mass or less, more preferably 0.0075 parts by mass or more and 0.3 parts by mass or less, further preferably 0.01 parts by mass or more and 0.1 parts by mass or less, relative to 100 parts by mass of the total of a mixing amount of component (A) and a mixing amount of component (B).
<8> The method for producing a hydraulic powder according to any one of <1> to <7>, wherein component (A) and component (B) are mixed such that a mass ratio of a mixing amount of component (A) to a mixing amount of component (B), (A)/(B), is 1 or more and 99 or less, more preferably 1.5 or more and 19 or less, further preferably 2.0 or more and 9 or less.
<9> The method for producing a hydraulic powder according to any one of <1> to <8>, wherein component (A) is mixed such that a content of component (A) in the hydraulic powder is preferably 50 mass% or more and 99 mass% or less, more preferably 60 mass% or more and 95 mass% or less, further preferably 70 mass% or more and 90 mass% or less.
<10> The method for producing a hydraulic powder according to any one of <1> to <9>, wherein component (B) is mixed such that a content of component (B) in the hydraulic powder is preferably 1 mass% or more and 50 mass% or less, more preferably 5 mass% or more and 40 mass% or less, further preferably 10 mass% or more and 30 mass% or less.
<11> The method for producing a hydraulic powder according to any one of <1> to <10>, wherein component (C) is mixed such that a content of component (C) in the hydraulic powder is preferably 0.005 mass% or more and 0.5 mass% or less, more preferably 0.0075 mass% or more and 0.3 mass% or less, further preferably 0.01 mass% or more and 0.1 mass% or less.
<12> The method for producing a hydraulic powder according to any one of <1> to <11>, wherein component (B) is one or more selected from a carbonate mineral, a pozzolanic powder, a latent hydraulic powder, and a silicate mineral,
   wherein the carbonate mineral includes, for example, one or more selected from calcium carbonate, magnesite, and dolomite;
   wherein the pozzolanic powder includes, for example, one or more selected from fly ash, silica fume, volcanic ash, woody biomass combustion ash, and silicate clay;
   wherein the latent hydraulic powder includes, for example, one or more selected from coal ash, blast furnace slag, and diatomaceous earth; and
   wherein the silicate mineral includes, for example, one or more selected from kaolin, aluminum silicate, clay, talc, mica, calcium silicate, sericite, and bentonite.
<13> The method for producing a hydraulic powder according to any one of <1> to <12>, wherein component (B) includes one or more selected from calcium carbonate, kaolin, and dolomite.

### Examples

### <Materials used>

<Component (A)>
   Component (A): Ordinary Portland cement (average particle size: 21.8 µm; manufactured by TAIHEIYO CEMENT CORPORATION)
<Component (B)>
   B-1: Fine calcium carbonate powder (average particle size: 31.3 µm; manufactured by SHIMIZU INDUSTRIAL, CO, LTD.)
   B-2: Dolomite (average particle size: 29.1 µm; manufactured by SHIMIZU INDUSTRIAL, CO, LTD.)
<Component (C)>
   C-1: Diethanolamine (manufactured by Tokyo Chemical Industry Co., Ltd.)
   C-2: N,N,N',N'-Tetrakis(2-hydroxyethyl)ethylenediamine (manufactured by Tokyo Chemical Industry Co., Ltd.)
   C-3: Diisopropanolamine (DL-/meso- mixture) (manufactured by Tokyo Chemical Industry Co., Ltd.)
   C-4: N-Methyldiethanolamine (manufactured by Tokyo Chemical Industry Co., Ltd.)
   C-5: Triisopropanolamine (isomer mixture) (manufactured by Tokyo Chemical Industry Co., Ltd.)

The iron content and Mohs hardness of component (B) shown in Table 1 were measured by the following methods.

### <Method for measuring iron content of component (B)>

The iron content of component (B) was measured using a powder X-ray diffractometer (RINT-2500; manufactured by Rigaku Holdings Corporation). Measurement conditions were as follows. Target: CuKα; Tube current: 40 mA; Tube voltage: 200 kV; and Scan range: 5 to 70 deg; 2θ. Scan conditions were as follows. Step scanning; Step width: 0.02°; and Counting time: 2 seconds. Further, "α-corundum (Al₂O₃)" was added as a reference material in an amount of 10 parts by mass relative to component (B), and the iron content, in terms of iron oxide (Fe₂O₃), was determined using Rietveld analysis software on the basis of the peak area of the reference material. As the Rietveld analysis software, PDXL Ver. 1.8 manufactured by Rigaku Holdings Corporation was used.

### <Method for measuring Mohs hardness of component (B)>

The Mohs hardness of component (B) was measured using a Mohs hardness tester (manufactured by Tokyo-Science. Co, Ltd). The reference minerals, in order from the softest mineral (Mohs hardness: 1) to the hardest mineral (Mohs hardness: 10), were talc, gypsum, calcite, fluorite, apatite, orthoclase, quartz, topaz, corundum, and diamond. The hardness was determined based on the presence or absence of a scratch when the target sample was rubbed with these reference minerals.

### <Method for calculating (aB)/(aA) for component (C)>

First, component (A) and component (B) were adjusted to 20°C. 0.01 g of component (C) was added to a 50-mL centrifuge tube and diluted with tap water to prepare an aqueous solution of component (C) having a concentration of 400 ppm.

25 g of component (A) or component (B) was added to this aqueous solution and mixed therewith for 1 minute by inverting the tube to prepare a cement paste. Immediately after preparation, the cement paste was centrifuged at 3,000 rpm for 1 minute, and the supernatant was then filtered through a membrane filter (DISMIC 25HP045AN; manufactured by ADVANTEC Co., LTD.) to obtain a filtrate. The filtrate was diluted 20-fold with 0.02 mol/L HCl aq. Based on the concentration of a non-adsorbed fraction of component (C) with respect to component (A) or component (B), as detected in the diluted filtrate by an online total organic carbon analyzer (TOC-V; manufactured by Shimadzu Corporation), the adsorption amount (aA) or (aB) of component (C) on component (A) or component (B) was calculated.

Based on the adsorption amount (aA) of component (C) obtained for component (A) and the adsorption amount (aB) of component (C) obtained for component (B), a mass ratio of the adsorption amount of component (C) on component (B) to the adsorption amount of component (C) on component (A), (aB)/(aA), was calculated.

### <Example 1 and Comparative Example 1>

### (1) Stirring and mixing of hydraulic powder

Component (A), component (B), and component (C) listed above were placed in a stirrer (MX-X301; manufactured by Panasonic Corporation) so as to provide the parts by mass shown in Table 1, and stirred for 2 minutes, followed by allowing the mixture to dissipate heat until 20°C to obtain a hydraulic powder.

In Examples 1-1 to 1-10, component (C) was sprayed onto component (B), after which component (A) was added and mixing or stirring was started.

Further, in Example 1-11, component (C) was sprayed onto component (A), after which component (B) was added and mixing or stirring was started.

In Comparative Example 1-1, component (A) and component (B) were placed in the stirrer so as to provide the parts by mass shown in Table 1 and stirred for 1 minute, after which component (C) was added and the mixture was further stirred for 1 minute, followed by allowing the mixture to dissipate heat until 20°C to obtain a hydraulic powder.

### (2) Method for analyzing average particle size of hydraulic powder

The hydraulic powders of Examples and Comparative Examples prepared by the method of (1) above were subjected to particle size distribution measurements using a laser diffraction/scattering particle size distribution analyzer (LA-920; manufactured by HORIBA, Ltd.), with "Ethanol (95)" (manufactured by FUJIFILM Wako Pure Chemical Corporation) used as a dispersion medium. An arithmetic mean diameter was recorded as the average particle size (µm). Further, based on the particle size distribution measurement results, a volume fraction of particles having a size of 50 µm or less in the hydraulic powder and a volume fraction of particles having a size of 20 µm or less in the hydraulic powder were calculated. The results are shown in Table 1.

In Examples, the larger the average particle size of the hydraulic powder, the more the fine pulverization of component (B) is suppressed. Further, the smaller the volume fraction of particles having a size of 50 µm or less or 20 µm or less in the hydraulic powder, the more the fine pulverization of the hydraulic powder is suppressed. That is, component (A), component (B-1), and component (B-2) contain, to some extent, particles having a particle size of 50 µm or more, and the degree of fine pulverization of the hydraulic powder can be estimated by evaluating the volume fraction of such particles.

**[Table 1]**

| | | Hydraulic powder | | | | | | | | | | | |
|---|---|---|---|---|---|---|---|---|---|---|---|---|---|
| | | Component (A) | Component (B) | | | | Component (C) | | | (A)/(B) (mass ratio) | Average particle size (µm) | Volume (%) of particles having a size of 50 µm or less | Volume (%) of particles having a size of 20 µm or less |
| | | Mixing amount (parts by mass) | Type | Iron content (mass%) | Mohs hardness | Mixing amount (parts by mass) | Type | Mixing amount (parts by mass) | (aB)/(aA) (mass ratio) | | | | |
| Example | 1-1 | 90 | B-1 | 0.1 | 3 | 10 | C-1 | 0.01 | 5.9 | 9 | 21.7 | 71.2 | 57.8 |
| | 1-2 | 90 | B-1 | 0.1 | 3 | 10 | C-1 | 0.04 | 5.9 | 9 | 22.4 | 70.8 | 50.0 |
| | 1-3 | 90 | B-1 | 0.1 | 3 | 10 | C-2 | 0.04 | 1.5 | 9 | 22.4 | 73.2 | 53.2 |
| | 1-4 | 90 | B-1 | 0.1 | 3 | 10 | C-3 | 0.04 | 3.0 | 9 | 22.4 | 73.5 | 52.7 |
| | 1-5 | 90 | B-1 | 0.1 | 3 | 10 | C-1 | 0.1 | 5.9 | 9 | 22.8 | 70.5 | 50.0 |
| | 1-6 | 99 | B-1 | 0.1 | 3 | 1 | C-1 | 0.04 | 5.9 | 99 | 20.5 | 73.9 | 53.4 |
| | 1-7 | 50 | B-1 | 0.1 | 3 | 50 | C-1 | 0.04 | 5.9 | 1 | 27.2 | 69.7 | 49.7 |
| | 1-8 | 90 | B-2 | 0.1 | 4 | 10 | C-1 | 0.04 | 4.5 | 9 | 19.8 | 72.6 | 56.1 |
| | 1-9 | 90 | B-1 | 0.1 | 3 | 10 | C-4 | 0.04 | 0.9 | 9 | 18.8 | 78.1 | 57.1 |
| | 1-10 | 90 | B-1 | 0.1 | 3 | 10 | C-5 | 0.04 | 1.2 | 9 | 17.3 | 76.1 | 53.3 |
| | 1-11 | 90 | B-1 | 0.1 | 3 | 10 | C-4 | 0.04 | 1.2 | 9 | 19.4 | 99.3 | 59.6 |
| Comparative example | 1-1 | 90 | B-1 | 0.1 | 3 | 10 | C-1 | 0.01 | 5.9 | 9 | 6.6 | 100 | 97.2 |

| | | | | | | | | | | | | | |
|---|---|---|---|---|---|---|---|---|---|---|---|---|---|
| Note 1: The mixing amount (parts by mass) of each component is a mixing amount relative to 100 parts by mass of the total mixing amount of components (A) and (B). Note 2: (aB)/(aA) represents the mass ratio (aB)/(aA) of the adsorption amount (aB) of component (C) on component (B) to the adsorption amount (aA) of component (C) on component (A). | | | | | | | | | | | | | |

As shown in Table 1, in Example 1-1, as compared with Comparative Example 1-1, fine pulverization of blended cement is suppressed. This is considered to be because component (C) covers and protects the surface of component (B) while electrostatically interacting with cationic sites on the surface of component (B) without excessively reducing the surface tension of the bound water, thereby suppressing fine pulverization of component (B).

Further, as shown in Table 1, in Examples 1-2 to 1-4, as compared with Examples 1-9 to 1-10, fine pulverization of blended cement is further suppressed. This is considered to be because a specific component (C) covers and protects the surface of component (B) while electrostatically interacting with cationic sites on the surface of component (B) without excessively reducing the surface tension of the bound water, thereby further suppressing fine pulverization of component (B).

## Claims

1. A method for producing a hydraulic powder, comprising mixing the following component (B) and the following component (C), and mixing and/or stirring the resulting mixture of the components (B) and (C) together with the following component (A):
component (A): cement clinker or cement powder;
component (B): one or more selected from minerals, slag, and ash, containing iron in an amount of less than 2.0 mass% in terms of iron oxide and having a Mohs hardness of 1 or more and 5 or less; and
component (C): a compound represented by the following general formula (c1) or a salt thereof: 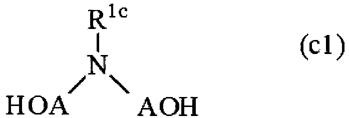
wherein R^{1c} represents a hydrogen atom, a hydrocarbon group having 1 or more and 4 or less carbons, a hydroxyalkyl group having 2 or more and 4 or less carbons, or a polar functional group having 4 or more and 10 or less carbons; and each AO independently represents an alkylene oxide having 2 or more and 4 or less carbons.

2. A method for producing a hydraulic powder, comprising mixing the following component (A) and the following component (C), and mixing and/or stirring the resulting mixture of the components (A) and (C) together with the following component (B):
component (A): cement clinker or cement powder;
component (B): one or more selected from minerals, slag, and ash, containing iron in an amount of less than 2.0 mass% in terms of iron oxide and having a Mohs hardness of 1 or more and 5 or less; and
component (C): a compound represented by the following general formula (c1) or a salt thereof: 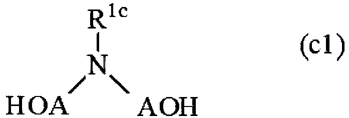
wherein R^{1c} represents a hydrogen atom, a hydrocarbon group having 1 or more and 4 or less carbons, a hydroxyalkyl group having 2 or more and 4 or less carbons, or a polar functional group having 4 or more and 10 or less carbons; and each AO independently represents an alkylene oxide having 2 or more and 4 or less carbons.

3. The method for producing a hydraulic powder according to claim 1 or 2, wherein R^{1c} in the general formula (c1) represents a hydrogen atom or a polar functional group having 4 or more and 10 or less carbons.

4. The method for producing a hydraulic powder according to any one of claims 1 to 3, wherein a mass ratio of an adsorption amount (aB) of the component (C) on the component (B) to an adsorption amount (aA) of the component (C) on the component (A), (aB)/(aA), is 1.0 or more.

5. The method for producing a hydraulic powder according to any one of claims 1 to 4, wherein the component (C) is mixed in an amount of 0.005 parts by mass or more and 0.5 parts by mass or less relative to 100 parts by mass of the total of a mixing amount of the component (A) and a mixing amount of the component (B).

6. The method for producing a hydraulic powder according to any one of claims 1 to 5, wherein the component (A) and the component (B) are mixed such that a mass ratio of a mixing amount of the component (A) to a mixing amount of the component (B), (A)/(B), is 1 or more and 99 or less.

7. The method for producing a hydraulic powder according to any one of claims 1 to 6, wherein a mixing amount of the component (A) relative to the hydraulic powder is 50 mass% or more and 99 mass% or less.

8. The method for producing a hydraulic powder according to any one of claims 1 to 7, wherein the component (B) comprises one or more selected from calcium carbonate, kaolin, and dolomite.
